# EUROPEAN PATENT APPLICATION

(11) **EP 2 474 892 A1**
(43) Date of publication of application: **11.07.2012**
(21) Application number: 10811584.1
(22) Date of filing: 03.06.2010
(51) Int. Cl.: G06F 3/048

(54) **INFORMATION PROCESSOR, METHOD FOR CONTROLLING INFORMATION PROCESSOR, AND PROGRAM**

(30) Priority: 31.08.2009 JP 2009200062
(71) Applicant: NEC Corporation, Tokyo 108-8001 (JP)
(72) Inventor: MITSUHASHI, Akitake, Tokyo 108-8001 (JP)
(74) Representative: Reeve, Nicholas Edward
(86) International application number: PCT/JP2010/059455
(87) International publication number: WO 2011/024531

(57) **Abstract**

An information processing apparatus of the present invention generates a whole image by executing a predetermined application; acquires operation time at which a user performs an operation for inputting information; if the whole image has changed, acquires a rectangular area including an area where the change has occurred in the whole image as a change area and acquires the change time at which the whole image has changed; if the difference between the operation time and the change time is equal to or below a predetermined value, acquires the change area as an operation area where the user is inputting information; and generates an operation-area-attached image by acquiring a rectangular area to be displayed on the screen of the information processing apparatus in the whole image as a reference area and by combining the operation area with the reference area.

## Description

### Technical Field

The present invention relates to a technique for making it easy to input information into an information processing apparatus.

### Background Art

When a user inputs characters or the like into a terminal, it is difficult for him to input them if the screen of the terminal is small and if there is a distance between an area displayed on the screen and an area for inputting characters or the like.

Specifically, if the terminal displays all images by reducing the size of the images, characters and the like included in the images will also be reduced, and it will be difficult for the user to read inputted characters and the like and perform an input operation.

In order to make it easy to read characters, the screen of a terminal described in Patent Literature 1 is divided into two areas. The whole sentence is displayed in one area, and a part of the sentence is enlarged and displayed in the other area.

In order to facilitate input, if the size of an image to be displayed is too large for the screen of the terminal, a terminal described in Patent Literature 2 displays the image, changing the size of the image so that it can fit the screen.

### Citation List

### Patent Literature

Patent Literature 1: JP 2004-349965 A
Patent Literature 2: JP 2006-276698 A

### Summary of Invention

### Technical Problem

However, even in the terminal (information processing apparatus) described in Patent Literature 1 or 2, it is sometimes still difficult for a user to operate the terminal.

In the terminal described in Patent Literature 1, it is difficult for a user to input characters when inputting the characters in the area for displaying the whole sentence because the characters are size-reduced and displayed. When inputting the characters into the area that has been designated for displaying enlarged text, the manipulation that the user has to perform is cumbersome because it is necessary to scroll the image to the input position.

In the terminal described in Patent Literature 2, the layout of a sentence may be broken due to resizing of an image. For example, a line feed position arranged at the end of a line before resizing may be in the middle of the line after resizing. Therefore, the user performs input while seeing an image that is different from an actual one, and it is sometimes difficult to perform the input.

The object of the present invention is to provide a technique for facilitating an input operation in an information processing apparatus.

### Solution to Problem

In order to achieve the above object, an information processing apparatus of the present invention includes:
a whole image generation unit that generates a whole image by executing a predetermined application;
an operation time acquisition unit that acquires an operation time at which a user performs an operation for inputting information;
an image change acquisition unit that, if the whole image generated by said whole image generation unit has changed, acquires a rectangular area including an area where the change has occurred in the whole image as a change area and acquires a change time at which the whole image has changed;
an operation area acquisition unit that, if a difference between the operation time acquired by said operation time acquisition unit and the change time acquired by said image change acquisition unit is equal to or below a predetermined value, acquires the change area acquired by said image change acquisition unit as an operation area where the user is inputting information; and
an operation-area-attached image generation unit that generates an operation-area-attached image by acquiring a rectangular area to be displayed on a screen of the information processing apparatus in the whole image generated by said whole image acquisition unit as a reference area and by combining the operation area acquired by said operation area acquisition unit with the reference area.

An information processing apparatus control method of the present invention includes:
a whole image generation unit generating a whole image by executing a predetermined application;
an operation time acquisition unit acquiring an operation time at which a user performs an operation for inputting information;
if the whole image generated by said whole image generation unit has changed, an image change acquisition unit for acquiring a rectangular area including an area where the change has occurred in the whole image as a change area and for acquiring a change time at which the whole image has changed;
if a difference between the operation time acquired by said operation time acquisition unit and the change time acquired by said image change acquisition unit is equal to or below a predetermined value, an operation area acquisition unit for acquiring the change area acquired by said image change acquisition unit as an operation area where the user is inputting information; and
an operation-area-attached image generation unit generating an operation-area-attached image by acquiring a rectangular area to be displayed on a screen of the information processing apparatus in the whole image generated by said whole image acquisition unit as a reference area and by combining the operation area acquired by said operation area acquisition unit with the reference area.

A program of the present invention causes a computer to execute:
a whole image generation procedure of generating a whole image by executing a predetermined application;
an operation time acquisition procedure of acquiring an operation time at which a user performs an operation for inputting information;
an image change acquisition procedure of, if the whole image generated by said image generation procedure has changed, acquiring a rectangular area including an area where the change has occurred in the whole image as a change area and acquiring a change time at which the whole image has changed;
an operation area acquisition procedure of, if a difference between the operation time acquired by said operation time acquisition procedure and the change time acquired by said image change acquisition procedure is equal to or below a predetermined value, acquiring the change area acquired by said image change acquisition procedure as an operation area where the user is inputting information; and
an operation-area-attached image generation procedure of generating an operation-area-attached image by acquiring a rectangular area to be displayed on a screen of the information processing apparatus in the whole image generated by said whole image acquisition procedure as a reference area and by combining the operation area acquired by said operation area acquisition procedure with the reference area.

### Advantageous Effects of Invention

According to the present invention, if a difference between operation time and change time at which the screen changes is equal to or below a predetermined value, a changed area is regarded as an operation area, and an image is generated by combining the operation area with a reference area. Therefore, a user can input information into the operation area while referring to the reference area. An input operation is facilitated thereby.

### Brief Description of Drawings

Figure 1 is a block diagram showing a configuration example of a terminal of a first exemplary embodiment.
Figure 2 is a table showing the contents of operation information of the first exemplary embodiment.
Figure 3 is a block diagram showing a configuration example of an image change detection unit of the first exemplary embodiment.
Figure 4 is a table showing the contents of image change information of the first exemplary embodiment.
Figure 5 is a block diagram showing a configuration example of an operation area detection unit of the first exemplary embodiment.
Figure 6 is a block diagram showing a configuration example of a display image generation unit of the first exemplary embodiment.
Figure 7 is a flowchart showing an operation of the terminal of the first exemplary embodiment.
Figure 8 is a flowchart showing an operation area detection process of the first exemplary embodiment.
Figure 9 is a flowchart showing an operation-area-attached image generation process of the first exemplary embodiment.
Figure 10 is a sequence diagram showing an example of an operation of the terminal of the first exemplary embodiment.
Figure 11A shows an example of a whole image of the first exemplary embodiment.
Figure 11B shows an example of a reference area of the first exemplary embodiment.
Figure 12A shows an example of the whole image of the first exemplary embodiment.
Figure 12B shows an example of an operation area of the first exemplary embodiment.
Figure 12C shows an example of an operation-area-attached image of the first exemplary embodiment.
Figure 13A shows an example of the whole image of the first exemplary embodiment.
Figure 13B shows an example of the operation area of the first exemplary embodiment.
Figure 13C shows an example of a current operation area of the first exemplary embodiment.
Figure 14 is a block diagram showing a configuration example of a terminal and a computer of a second exemplary embodiment.
Figure 15 is a block diagram showing a configuration example of a terminal and a computer of a third exemplary embodiment.

### Description of Embodiments

Exemplary embodiments for practicing the present invention will be described in detail with reference to drawings.

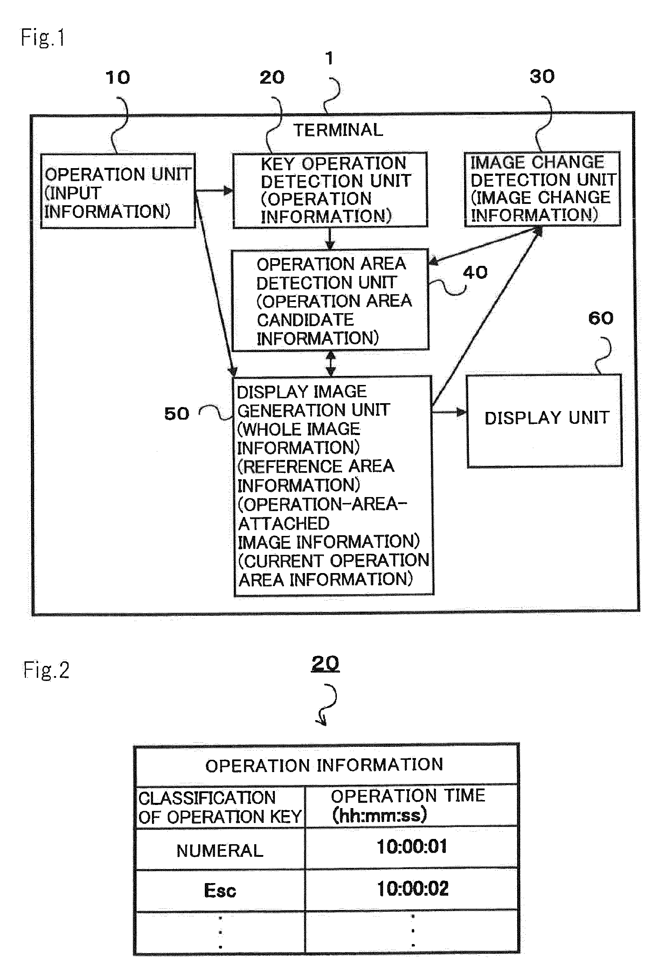

Figure 1 is a block diagram showing the configuration of terminal 1 of an exemplary embodiment. Terminal 1 is an information processing apparatus such as a personal computer. As shown in Figure 1, terminal 1 has operation unit 10, key operation detection unit 20, image change detection unit 30, operation area detection unit 40, display image generation unit 50 and display unit 60.

Operation unit 10 is an input device such as a keyboard and a mouse.

Operation unit 10 detects an operation of operation unit 10, generates input information, and inputs the input information into key operation detection unit 20 and display image generation unit 50. The input information is information showing how a user has operated operation unit 10 and includes information about the classification of the key which the user has operated.

When receiving the input information from operation unit 10, key operation detection unit 20 acquires time from a clock (not shown) provided inside terminal 1. Then, key operation detection unit 20 records the acquired time as operation time and reads out the classification of the key from the received input information.

Key operation detection unit 20 generates operation information showing classifications of keys which the user has operated and operation time and outputs the operation information to operation area detection unit 40.

Figure 2 is a table showing the contents of the operation information. Referring to Figure 2, "operation key classification" and "operation time" are stored in the operation information as being associated with each other. The "operation key classification" indicates the classification of a key which the user has operated. In Figure 2, "numerical key" and "escape key (ESC key)" are shown as examples of operation key classification. The "operation time" indicates time at which an operation of a key corresponding to an "operation key classification" was performed.

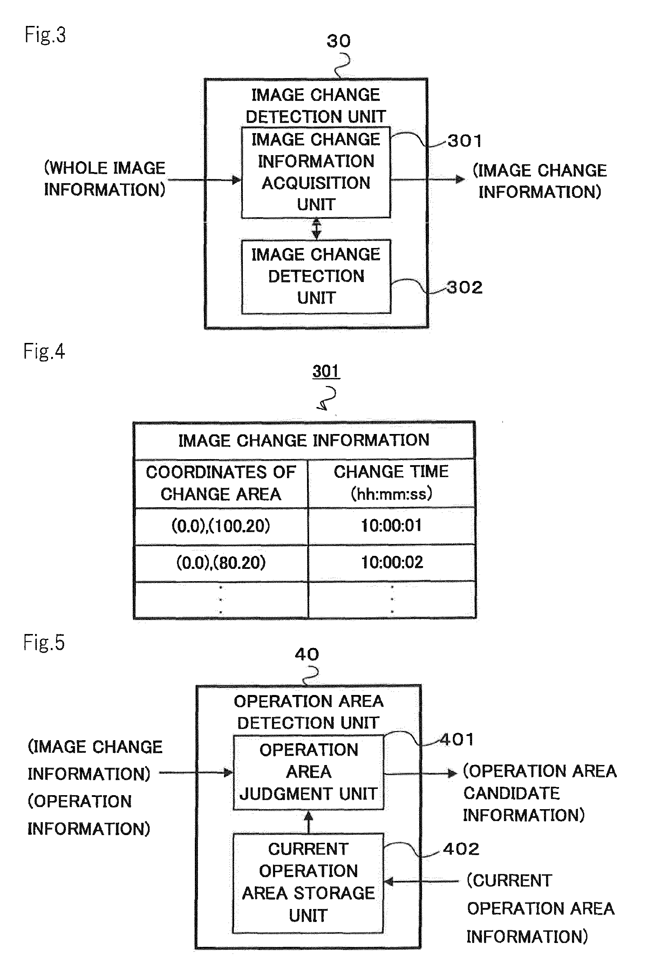

Figure 3 is a block diagram showing a configuration example of image change detection unit 30. Referring to Figure 3, image change detection unit 30 has image change information acquisition unit 301 and whole image storage unit 302.

Image change information acquisition unit 301 cyclically acquires whole image information from display image generation unit 50. Image change information acquisition unit 301 stores the acquired whole image information into whole image storage unit 302.

Here, the whole image information is image information showing an unprocessed whole image which has been generated by executing an application for displaying an image on the screen of terminal 1. This application is, for example, an application for generating and editing text data. If the resolution of an image generated by execution of the application is higher than the resolution of an image which can be displayed by terminal 1, terminal 1 cannot display the generated entire image as is. Therefore, terminal 1 displays a part of the image cut out or a reduced image. The whole image information acquired by image change information acquisition unit 301 is image information showing the whole image before performing processing such as cutting-out and reduction.

When acquiring whole image information at and after the second time, image change information acquisition unit 301 reads out the whole image information acquired the previous time from whole image storage unit 302 and compares it with the whole image information acquired this time.

Image change information acquisition unit 301 detects a rectangular area (change area) including an area where change has occurred in the whole image shown by the whole image information.

Then, image change information acquisition unit 301 generates image change information including information for identifying the detected change area and information showing the time of the detection.

After comparing the whole images, image change information acquisition unit 301 updates the whole image information stored in whole image storage unit 302 with the whole image information acquired this time.

Figure 4 is a table showing the contents of the image change information. Referring to Figure 4, "change area coordinates" and "change time" are stored in the image change information as being associated with each other.

The "change area coordinates" are the coordinates of two opposite apexes (for example, an upper left apex and a lower right apex) among the apexes of a change area. The "change time" indicates time at which a change area corresponding to the "change area coordinates" was detected.

Figure 5 is a block diagram showing a configuration example of operation area detection unit 40. Referring to Figure 5, operation area detection unit 40 has operation area judgment unit 401 and current operation area storage unit 402.

Operation area judgment unit 401 acquires operation information from key operation detection unit 20 and acquires image change information from image change detection unit 30. Operation area judgment unit 401 compares operation time that corresponds to a particular key, from among keys shown by the operation information, with change time shown by the image change information.

It is assumed that a target key for which change time and operation time is to be compared is a key used for inputting a character. If a key shown in the operation information is a key which is generally not used for inputting a character, such as the function key and an escape key, the operation time of the key is excluded from the comparison with change time.

If a difference between the operation time and the change time is equal to or below a predetermined threshold, then operation area judgment unit 401 judges a change area shown by the image change information to be an operation area.

Here, the operation area is an area where a change has occurred as a result of the user performing an operation within a cycle of image change detection unit 30 acquiring a whole image. For example, an area which has changed due to the user performing a key operation to display an inputted character is a change area. An image may change even if the user does not perform a key operation, for example, it changes when a screen saver operates. However, such a change area is not an operation area.

Then, operation area judgment unit 401 reads out current operation area information from current operation area storage unit 402. This current operation area information is information for identifying a current operation area.

The current operation area will be described. As previously described, image change information acquisition unit 301 acquires whole image information at a predetermined cycle, and operation area detection unit 40 detects an operation area multiple times by comparing change time and operation time.

Then, if the current operation area is not within the screen of terminal 1, display image generation unit 50 processes the operation area. The current operation area is an operation area that is detected last among operation areas detected by multiple detections. If processing has been performed, the current operation area will be the processed operation area.

Operation area judgment unit 401 judges whether or not the distance between the read current operation area and the detected operation area is equal to or below a threshold. Here, the distance between the areas is the distance between coordinates in one area and those in the other area. For example, operation area judgment unit 401 compares the distance between the central coordinates of the current operation area and those of the operation area with the threshold. Otherwise, operation area judgment unit 401 compares the distance between the coordinates of the upper left apex of the current operation area and those of the operation area with the threshold.

If the distance between the areas is equal to or below the threshold, then operation area judgment unit 401 causes the detected operation area to be an operation area candidate and outputs operation area candidate information that shows the operation area candidate to display image generation unit 50.

Here, the threshold is such a value that, when the distance is above the threshold, the detected operation area is not contained in but is beyond the current operation area. The position of the operation area within the screen that moves as text is added. However, operation area judgment unit 401 can update the current operation area, following the movement of the operation area, by comparing the distance between the areas.

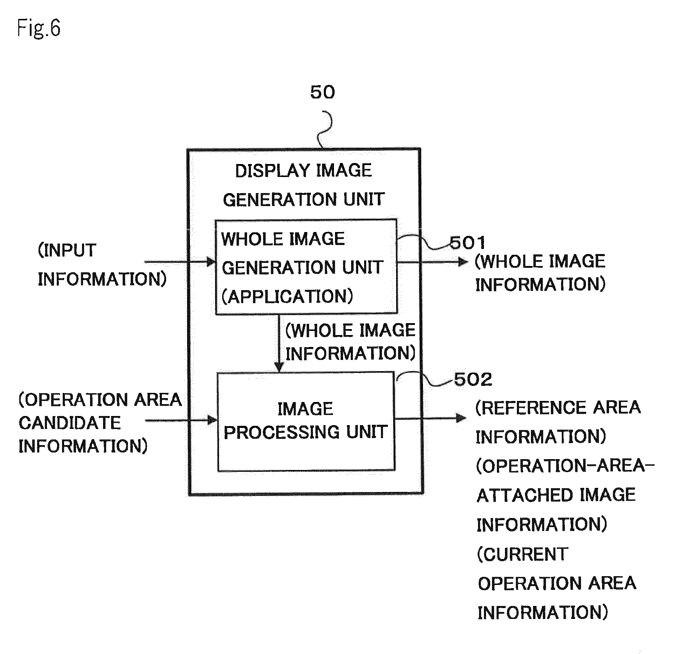

Figure 6 is a block diagram showing a configuration example of display image generation unit 50. Referring to Figure 6, display image generation unit 50 has whole image generation unit 501 and image processing unit 502.

Whole image generation unit 501 has an application such as an application for creating text. Whole image generation unit 501 acquires input information from operation unit 10 and generates whole image information including the contents of the input information using the application. Whole image generation unit 501 outputs the generated whole image information to image processing unit 502 and image change detection unit 30.

Image processing unit 502 acquires operation area candidate information from operation area detection unit 40 and acquires the whole image information from whole image generation unit 501. Then, if an operation area candidate shown by the operation area candidate information is not contained within the screen of terminal 1, image processing unit 502 processes it so that it is contained within the screen. Image processing unit 502 also performs image processing, for example, by cutting out a part of a whole image shown by the whole image information to generate an image contained within the screen of terminal 1. The area of this image in the original whole image is referred to as a reference area.

When an operation area is not detected, image processing unit 502 outputs reference area information, which is image data showing the reference area, to display unit 60.

When an operation area is detected, image processing unit 502 combines the operation area candidate and the reference area and causes the combined image to be an operation-area-attached image. In the case of performing processing of the operation area candidate, image processing unit 502 performs the combination after processing has been performed. Then, image processing unit 502 outputs operation-area-attached image information showing the generated operation-area-attached image to display unit 60. Image processing unit 502 causes the operation area in the operation-area-attached image to be a current operation area and outputs current operation area information for identifying the current operation area to operation area detection unit 40.

The current operation area information is, for example, information showing the coordinates of two opposite points (for example, an upper left apex and a lower right apex) among the apexes of the current operation area.

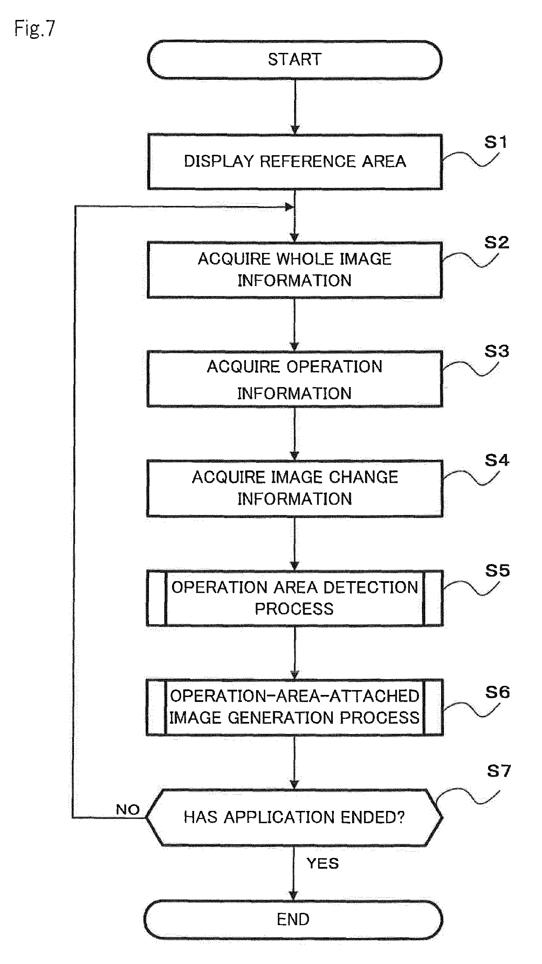

Next, the operation of terminal 1 will be described with reference to Figure 7. Figure 7 is a flowchart showing the operation of terminal 1. This operation is started when an application used for creating or editing text has been executed.

When the application is executed, display image generation unit 50 acquires whole image information at a predetermined cycle. In the first cycle, display image generation unit 50 cuts out a part of a whole image shown by the whole image information and generates a reference area which can be displayed by terminal 1. Display unit 60 displays the reference area on the screen (step S1). When the time for acquiring the whole image comes in the next cycle, image change acquisition unit 30 acquires whole image information (step S2).

When the user operates operation unit 10, key operation detection unit 20 acquires operation information showing the classification of the key and operation time (step S3). Image change detection unit 30 compares the whole image of the previous time with the whole image of this time and acquires image change information showing a change area and change time (step S4).

Operation area detection unit 40 executes an operation area detection process for detecting an operation area candidate (step S5). Display image generation unit 50 executes an operation-area-attached image generation process for displaying the detected operation area candidate on an image (step S6).

Terminal 1 judges whether or not the application for creating text has ended (step S7). If the application has not ended (step S7: NO), terminal 1 returns to step S2. If the application has ended (step S7: YES), terminal 1 ends the operation.

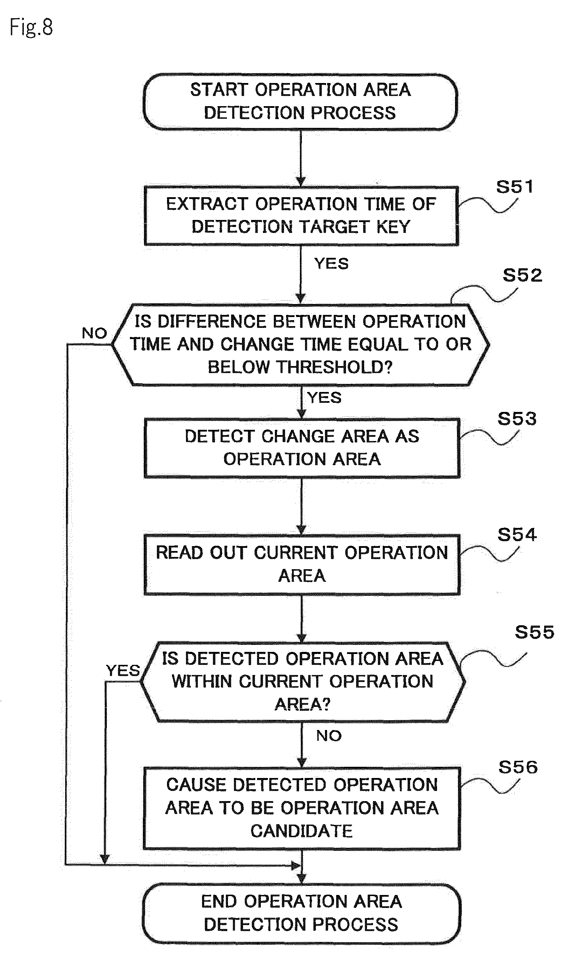

Figure 8 is a flowchart showing the operation area detection process of step S5 in Figure 7. Referring to Figure 8, operation area detection unit 40 acquires the classification of an operation key from operation information and extracts only the operation time of the detection target key (step S51). The detection target key is assumed to be, for example, a key used for inputting a character.

Operation area detection unit 40 judges whether or not the difference between the operation time of the detection target key and the change time is equal to or below a threshold (step S52).

If the difference between the operation time and the change time is equal to or below the threshold (step S52: YES), operation area detection unit 40 detects the change area that corresponds to the change time as an operation area (step S53).

Operation area detection unit 40 reads out a stored current operation area (step S54). Operation area detection unit 40 compares the distance between the detected operation area and the current operation area and judges whether or not the detected operation area is within the current operation area (step S55).

If the operation area is not within the current operation area (step S55: NO), operation area detection unit 40 causes the detected operation area to be an operation area candidate. Operation area detection unit 40 generates operation area candidate information that shows the coordinates of an apex of the operation area candidate (step S56).

If the difference between the operation time and the change time is not equal to or below the threshold (step S52: NO), and if the operation area is within the current operation area (step S55: YES), or after step S56, operation area detection unit 40 ends the operation area detection process.

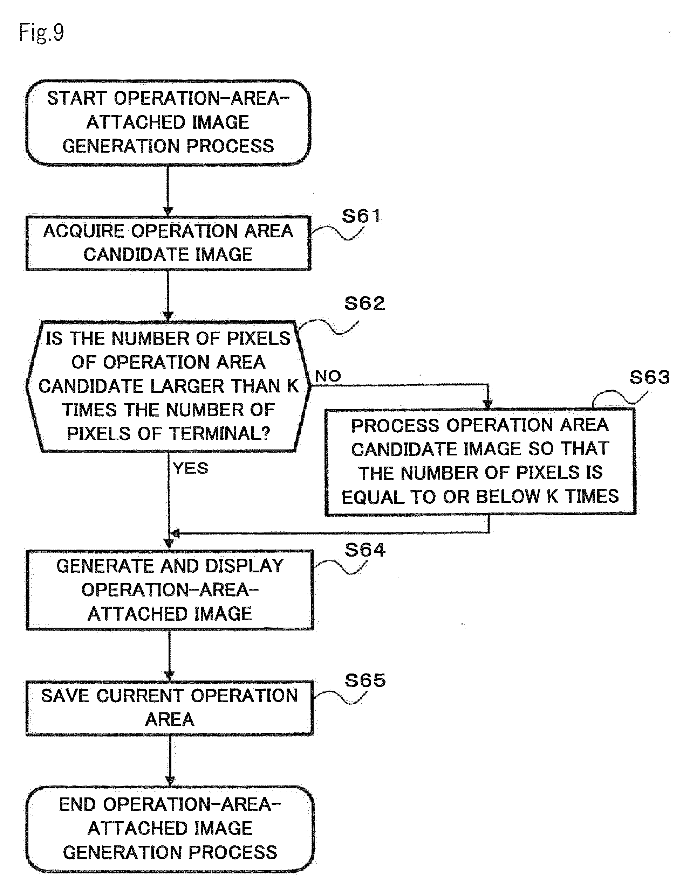

Figure 9 is a flowchart showing the operation-area-attached image generation process of step S6 in Figure 7. Referring to Figure 9, display image generation unit 50 acquires an image within coordinates shown by operation area candidate information in a whole image shown by whole image information (step S61).

Display image generation unit 50 judges whether or not the number of vertical and horizontal pixels of an acquired operation area candidate is larger than K times the number of pixels which can be displayed on terminal 1 (step S62).

If the number of vertical and horizontal pixels of the operation area candidate is larger than K times the number of pixels which can be displayed on terminal 1 (step S62: YES), the image of the operation area candidate is processed so that the number of vertical and horizontal pixels of the operation area candidate is equal to or smaller than K times (step S63).

If the number of vertical and horizontal pixels of the operation area candidate is equal to or smaller than K times the number of pixels which can be displayed on terminal 1 (step S62: NO) or after step S63, display image generation unit 50 combines a reference area and the operation area candidate to generate an operation-area-attached image and displays it on display unit 60 (step S64). Then, display image generation unit 50 stores an operation area in the operation-area-attached image, into operation area detection unit 40 as a current operation area (step S65). After step S65, display image generation unit 50 ends the operation-area-attached image generation process.

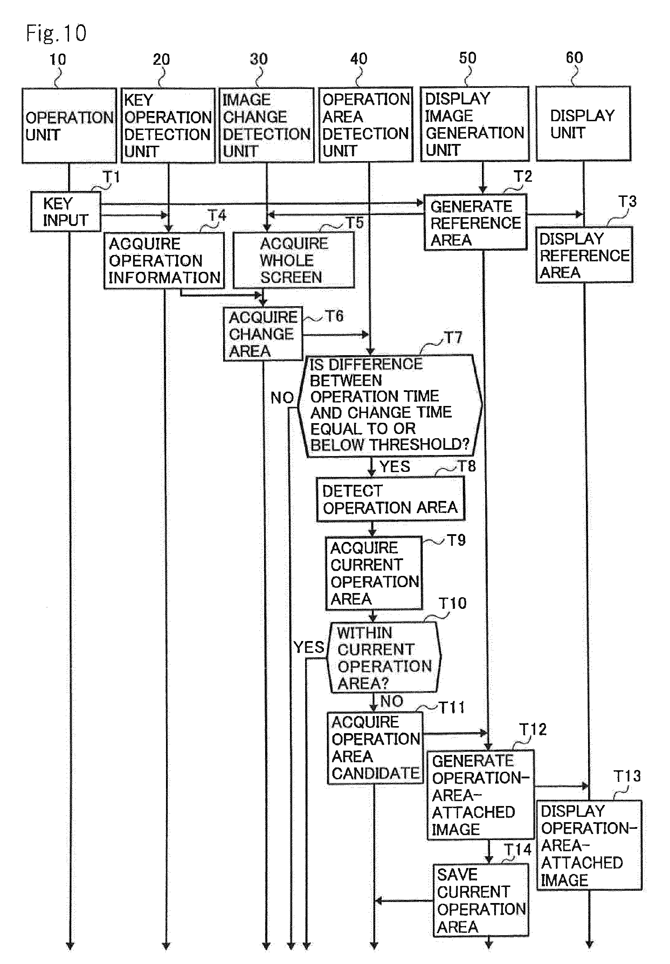

Figure 10 is a sequence diagram showing an example of an operation of terminal 1. Referring to Figure 10, operation unit 10 inputs the input information in accordance with a user operation (step T1). Display image generation unit 50 generates a whole image on the basis of the input information and outputs the whole image to image change detection unit 30. Display image generation unit 50 also cuts out a part of the whole image to generate a reference area (step T2). Display unit 60 displays the reference area on the screen of terminal 1 (step T3).

Key operation detection unit 20 detects an operation of a particular key and generates operation information (step T4). When the time for acquiring a whole image comes, image change detection unit 30 acquires a whole image (step T5). Image change detection unit 30 compares the whole image of this time with the whole image of the previous time and acquires a change area and change time (step T6).

Operation area detection unit 40 judges whether or not the difference between the operation time and the change time is equal to or below a threshold (step T7). If the difference between the operation time and the change time is equal to or below the threshold (step T7: YES), operation area detection unit 40 detects the change area as an operation area (step T8). Then, operation area detection unit 40 reads out a current operation area (step T9).

Operation area detection unit 40 judges whether or not the detected operation area is within the current operation area (step T10). If the operation area is not within the current operation area (step T10: NO), operation area detection unit 40 outputs the operation area to display image generation unit 50 as an operation area candidate (step T11).

Display image generation unit 50 combines the reference area and the operation area candidate to generate an operation-area-attached whole image (step T12). Display unit 60 displays the operation-area-attached whole image (step T13).

Then, display image generation unit 50 stores an operation area in the operation-area-attached candidate image, into operation area detection unit 40 as a current operation area (step T14).

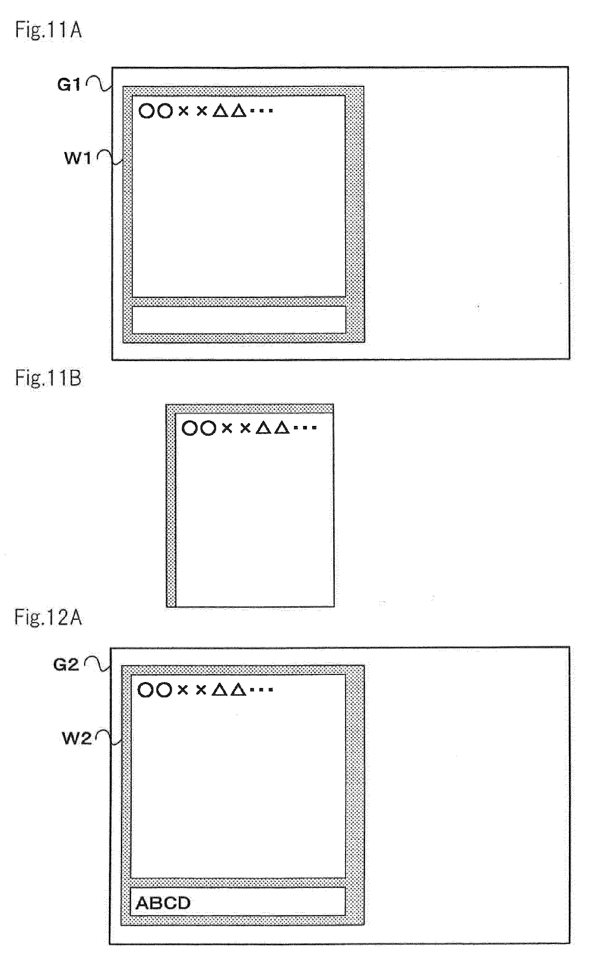

Next, an example of an operation result of terminal 1 will be described with reference to Figures 11 to 13. Figure 11A shows an example of whole image G1 before it changes due to a key operation. As shown in Figure 1A, when the application for creating text is executed, whole image G1 including window W1 is generated.

As shown in Figure 11B, terminal 1 cuts out a part of window W1 in a size displayable on the screen of terminal 1 and displays it as a reference area.

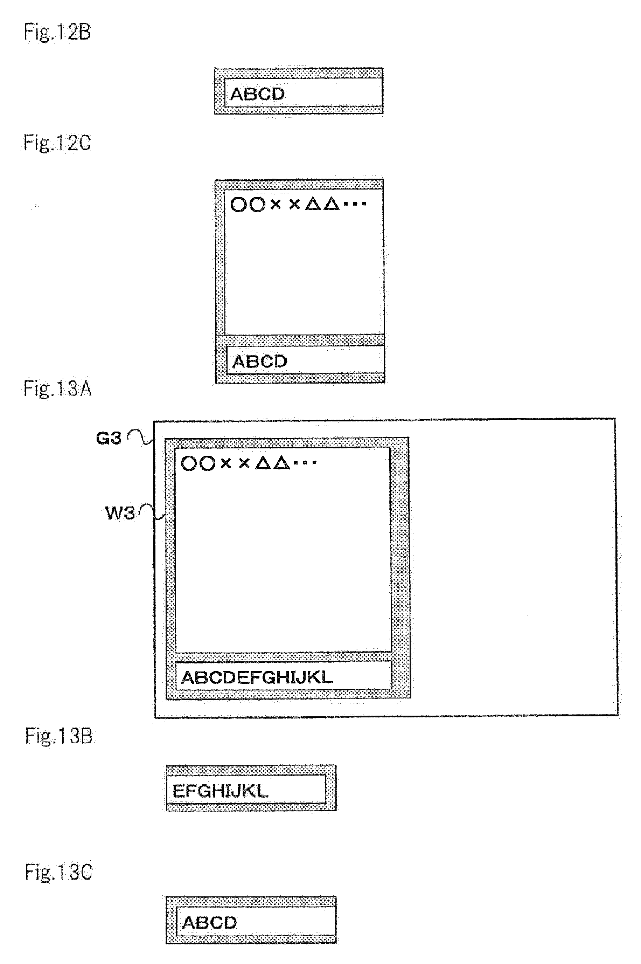

A case will be considered where "ABCD" is inputted before the next cycle has elapsed after acquisition of whole image G1. In this case, whole image G2 including the inputted "ABCD" in window W2 is generated, as shown in Figure 12A. Terminal 1 compares whole images G1 and G2 and extracts a rectangular area including "ABCD" as a change area as shown in Figure 12B. Because the change time and the operation time is the same, terminal 1 detects the change area as an operation area.

As shown in Figure 12C, terminal 1 combines an operation area and a reference area to generate an operation-area-attached image and displays it. For example, terminal 1 overlaps the operation area on the reference area so that the operation area is positioned at the front. Terminal 1 stores the operation area in this operation-area-attached image as a current operation area.

A case will be considered where "EFGHIJKL" is inputted before the time for acquiring the next whole image information comes after "ABCD" was inputted, as shown in Figure 13A.

In this case, terminal 1 detects a rectangular area including "EFGHIJKL" as an operation area, as shown in Figure 13B. Here, the current operation area is the rectangular area including "ABCD", as shown in Figure 13C. The detected operation area is not included in the current operation area. Therefore, terminal 1 generates operation-area-attached image information on the basis of the detected operation area and the reference area and updates the current operation area.

Though input information is assumed to be character information in this exemplary embodiment, the input information may be any information other than a character if it is such information that the screen changes in response to a user input operation. For example, a symbol other than a character or a musical note is also possible.

Operation unit 10 of this exemplary embodiment corresponds to an input unit of the present invention, and whole image generation unit 501 of this exemplary embodiment corresponds to a whole image generation unit of the present invention. Key operation detection unit 20 of this exemplary embodiment corresponds to an operation time acquisition unit and to the key classification acquisition unit of the present invention; operation area judgment unit 402 of this exemplary embodiment corresponds to a judgment unit of the present invention; and current operation area storage unit 402 of this exemplary embodiment corresponds to a current operation area storage unit of the present invention. Image change detection unit 30 of this exemplary embodiment corresponds to an image change acquisition unit of the present invention; operation area detection unit 40 of this exemplary embodiment corresponds to an operation area acquisition unit of the present invention; and image processing unit 502 of this exemplary embodiment corresponds to an operation-area-attached image generation unit of the present invention.

According to this exemplary embodiment, if the difference between operation time and change time at which the screen changes is equal to or below a predetermined value, terminal 1 causes a changed area to be an operation area and generates an image by combining the operation area with a reference area, as described above. Therefore, a user can input information into the operation area while referring to the reference area. An input operation is facilitated thereby.

Furthermore, since terminal 1 cyclically acquires a whole image, it can update the operation area following a user operation performed within a cycle.

Since image change detection unit 30 generates information showing the coordinates of opposite apexes of a change area, the amount of data of the generated information is smaller and the processing speed is faster in comparison with the case of generating information about an image showing the change area itself.

Since operation area detection unit 40 regards a key for inputting a character as a detection target, it does not happen that the operation area is updated in response to a key operation other than a key operation for inputting a character, so that wasteful processing is reduced.

Since display image generation unit 50 processes the operation area, it is possible to prevent the contents of the operation area from not being displayed within the screen of terminal 1.

Since operation area detection unit 40 updates the current operation area if a detected change area is not in the current operation area, even if a change area moves in response to a user operation, display unit 60 can display the operation area after the movement has occurred.

### (Second exemplary embodiment)

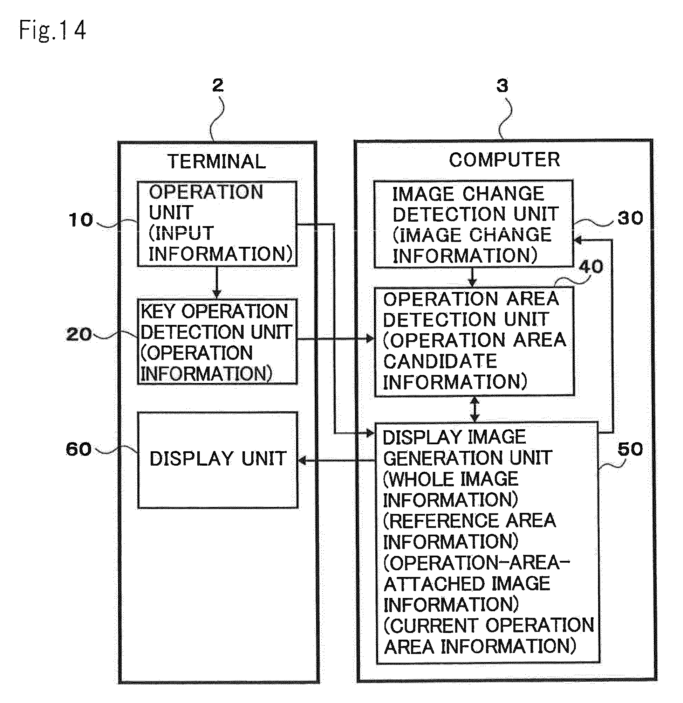

A second exemplary embodiment will be described with reference to Figure 14. Figure 14 is a general view showing the configuration of terminal 2 and computer 3 of this exemplary embodiment. Terminal 2 and computer 3 of this exemplary embodiment are different from the first exemplary embodiment in that the functions of terminal 1 in the first exemplary embodiment are distributed between two apparatuses. Terminal 2 and computer 3 are information processing apparatuses such as a personal computer.

In this exemplary embodiment, terminal 2 has operation unit 10, key operation detection unit 20 and display unit 60 among operation unit 10, key operation detection unit 20, image change detection unit 30, operation area detection unit 40, display image generation unit 50 and display unit 60 of terminal 1.

On the other hand, computer 3 has remaining image change detection unit 30, operation area detection unit 40 and display image generation unit 50.

According to this exemplary embodiment, a load imposed on one apparatus is reduced by the distribution of the functions. Risks in case of failure can be also distributed.

### (Third exemplary embodiment)

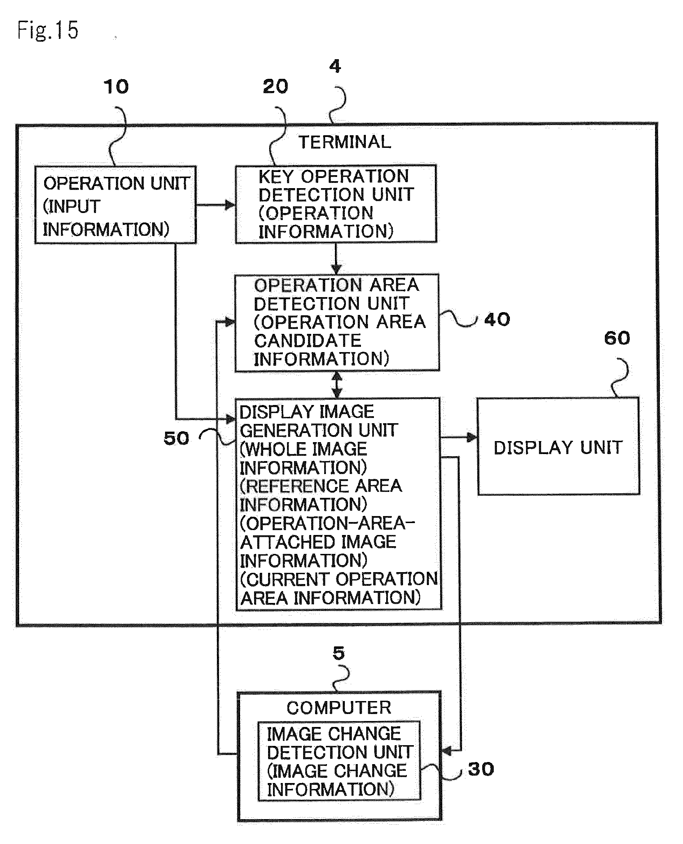

A third exemplary embodiment will be described with reference to Figure 15. Figure 15 is a general view showing the configuration of terminal 4 and computer 5 of this exemplary embodiment. Terminal 4 and computer 5 of this exemplary embodiment are different from the first exemplary embodiment in that the functions of terminal 1 in the first exemplary embodiment are distributed between two apparatuses. Terminal 4 and computer 5 are information processing apparatuses such as a personal computer.

In this exemplary embodiment, terminal 4 has operation unit 10, key operation detection unit 20, operation area detection unit 40, display image generation unit 50 and display unit 60 among operation unit 10, key operation detection unit 20, image change detection unit 30, operation area detection unit 40, display image generation unit 50 and display unit 60 of terminal 1.

On the other hand, computer 5 has remaining image change detection unit 30.

Display image generation unit 50 of this exemplary embodiment corresponds to a transmission unit of the present invention.

It goes without saying that the functions may be distributed by a configuration other than the configurations shown in the second and third exemplary embodiments.

The present invention has been described with reference to the exemplary embodiments. However, the present invention is not limited to the above exemplary embodiments. Various changes which can be understood by one skilled in the art can be made in the configuration or details of the present invention within the scope of the present invention.

This application claims the right of priority based on Japanese Patent Application No. 2009-200062 filed on August 31, 2009, the disclosure of which is hereby incorporated by reference thereto in its entirety.

## Claims

1. An information processing apparatus comprising:
a whole image generation unit that generates a whole image by executing a predetermined application;
an operation time acquisition unit that acquires an operation time at which a user performs an operation for inputting information;
an image change acquisition unit that, if the whole image generated by said whole image generation unit has changed, acquires a rectangular area including an area where the change has occurred in the whole image as a change area and acquires a change time at which the whole image has changed;
an operation area acquisition unit that, if a difference between the operation time acquired by said operation time acquisition unit and the change time acquired by said image change acquisition unit is equal to or below a predetermined value, acquires the change area acquired by said image change acquisition unit as an operation area where the user is inputting information; and
an operation-area-attached image generation unit that generates an operation-area-attached image by acquiring a rectangular area to be displayed on a screen of the information processing apparatus in the whole image generated by said whole image acquisition unit as a reference area and by combining the operation area acquired by said operation area acquisition unit with the reference area.

2. The information processing apparatus according to claim 1, wherein said image change acquisition unit cyclically acquires the whole image generated by said whole image generation unit and acquires the change area by comparing a whole image acquired this time and a whole image acquired the previous time.

3. The information processing apparatus according to claim 1 or 2, wherein
said image change acquisition unit generates change area information showing coordinates of two opposite apexes of the change area; and
said operation-area-attached image generation unit identifies the change area on the basis of the change area information generated by said operation area acquisition unit.

4. The information processing apparatus according to any one of claims 1 to 3, further comprising a key classification acquisition unit that acquires classification information showing classification of a key by which the operation has been performed; wherein
if the classification of the key acquired by said key classification acquisition unit is a predetermined classification, and if the difference between the operation time and the change time is equal to or below the predetermined value, said operation area acquisition unit will acquire the change area as the operation area.

5. The information processing apparatus according to any one of claims 1 to 4, wherein said operation-area-attached image generation unit judges whether or not the total number of pixels in a vertical direction of the operation area or the total number of pixels in a horizontal direction of the operation area is equal to or larger than a maximum value, and, if the total number of pixels is equal to or larger than the maximum value, processes the operation area so that the total number of pixels is smaller than the maximum value and combines the processed operation area with the reference area.

6. The information processing apparatus according to claim 5, wherein
said operation area acquisition unit comprises:
a current operation area storage unit that stores the operation area in the operation-area-attached image generated by said operation area image generation unit as a current operation area; and
a judgment unit that, if the difference between the operation time and the change time is equal to or below the predetermined value, judges whether or not the change area is included in the current operation area stored in said current operation area storage unit, and, if the change area is not included in the current operation area, acquires the change area as the operation area.

7. The information processing apparatus according to any one of claims 1 to 6, further comprising an input unit that inputs information in response to a user operation; wherein
said operation time acquisition unit acquires a time at which information has been inputted by said input unit as the operation time.

8. The information processing apparatus according to any one of claims 1 to 7, further comprising a display unit that displays the reference area acquired by said operation-area-attached image generation unit or the operation-area-attached image generated by said operation-area-attached image generation unit.

9. The information processing apparatus according to any one of claims 1 to 8, further comprising a transmission unit that transmits the whole image generated by said whole image generation unit to another information processing apparatus; wherein
said image change acquisition unit receives the whole image from the other information processing apparatus.

10. An information processing apparatus control method comprising:
a whole image generation unit for generating a whole image by executing a predetermined application;
an operation time acquisition unit for acquiring an operation time at which a user performs an operation for inputting information;
if the whole image generated by said whole image generation unit has changed, an image change acquisition unit for acquiring a rectangular area including an area where the change has occurred in the whole image as a change area and for acquiring a change time at which the whole image has changed;
if a difference between the operation time acquired by said operation time acquisition unit and the change time acquired by said image change acquisition unit is equal to or below a predetermined value, an operation area acquisition unit for acquiring the change area acquired by said image change acquisition unit as an operation area where the user is inputting information; and
an operation-area-attached image generation unit for generating an operation-area-attached image by acquiring a rectangular area to be displayed on a screen of the information processing apparatus in the whole image generated by said whole image acquisition unit as a reference area and by combining the operation area acquired by said operation area acquisition unit with the reference area.

11. A program for causing a computer to execute:
a whole image generation procedure of generating a whole image by executing a predetermined application;
an operation time acquisition procedure of acquiring an operation time at which a user performs an operation for inputting information;
an image change acquisition procedure of, if the whole image generated by said image generation procedure has changed, acquiring a rectangular area including an area where the change has occurred in the whole image as a change area and acquiring a change time at which the whole image has changed;
an operation area acquisition procedure of, if a difference between the operation time acquired by said operation time acquisition procedure and the change time acquired by said image change acquisition procedure is equal to or below a predetermined value, acquiring the change area acquired by said image change acquisition procedure as an operation area where the user is inputting information; and
an operation-area-attached image generation procedure of generating an operation-area-attached image by acquiring a rectangular area to be displayed on a screen of the information processing apparatus in the whole image generated by said whole image acquisition procedure as a reference area and by combining the operation area acquired by said operation area acquisition procedure with the reference area.
